# EUROPÄISCHE PATENTANMELDUNG

(11) **EP 1 674 836 A1**
(43) Veröffentlichungstag der Anmeldung: **28.06.2006**
(21) Anmeldenummer: 05024384.9
(22) Anmeldetag: 09.11.2005
(51) Int. Cl.: G01F 1/58

(54) **Magnetisch-induktives Durchflussmessgerät**

(30) Priorität: 22.12.2004 DE 102004063020
(71) Anmelder: Krohne AG, 4019 Basel (CH)
(72) Erfinder: Poortmann, Boudewijn Jozef, 3314 GD Dordrecht (NL); Herremans, Pieter, 3381 LH Giessenburg (NL); Lee, Robin Michael, Linton, Cambridge CB1 6JF (GB); Jones, Ross Peter, Cambridge CB1 8QH (GB)
(74) Vertreter: Gesthuysen, von Rohr & Eggert

(57) **Zusammenfassung**

Die Erfindung betrifft ein magnetisch-induktives Durchflußmeßgerät, mit einem Magnetkreis, der wenigstens eine Spule (9) und wenigstens zwei lösbar miteinander verbundene Bauteile aus einem magnetischen Material aufweist. Erfindungsgemäß ist vorgesehen, daß das eine Bauteil einen elastisch verformbaren Federbereich aufweist, mit dem es gegen das andere Bauteil drückt. Auf diese Weise wird ein einfach zusammenbaubares magnetisch-induktives Durchflußmeßgerät bereitgestellt, das mit großen Fertigungstoleranzen herstellbar ist.

## Beschreibung

Die Erfindung betrifft ein magnetisch-induktives Durchflußmeßgerät, mit einem Magnetkreis, der wenigstens eine Spule und wenigstens zwei lösbar miteinander verbundene Bauteile aus einem magnetischen Material aufweist. Ein derartiges magnetisch-induktives Durchflußmeßgerät ist z. B. aus der DE 34 20 963 C2 bekannt.

Die allgemeine Technik magnetisch-induktiver Durchflußmeßgeräte ist aus dem Stand der Technik gut bekannt, wozu exemplarisch verwiesen wird auf "K.W. Bonfig, Technische Durchflußmessung, 3. Auflage, Vulkan-Verlag Essen, 2002, S. 123 - 167". Das grundlegende Prinzip eines magnetisch-induktiven Durchflußmeßgeräts geht zurück auf Faraday, der im Jahre 1832 vorgeschlagen hat, das Prinzip der elektrodynamischen Induktion zur Strömungsgeschwindigkeitsmessung anzuwenden. Nach dem Faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Faraday'sche Induktionsgesetz wird bei einem magnetisch-induktiven Durchflußmeßgerät dadurch ausgenutzt, daß mittels einer Magnetfeldeinrichtung mit typischerweise zwei Spulen, ein Magnetfeld erzeugt und über die Querschnittsfläche der Meßleitung geführt wird, wobei das Magnetfeld eine Magnetfeldkomponente aufweist, die senkrecht zur Strömungsrichtung verläuft. Innerhalb dieses Magnetfelds liefert sich jedes durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über die Elektroden abgreifbaren Meßspannung. Ein besonderes Merkmal der magnetisch-induktiven Durchflußmeßgeräte ist dabei die Proportionalität zwischen der Meßspannung und der über den Querschnitt der Meßleitung gemittelten Strömungsgeschwindigkeit des Mediums, d. h. zwischen Meßspannung und Volumenstrom.

Magnetisch-induktive Durchflußmeßgeräte sind häufig modular aufgebaut, weisen also eine Mehrzahl von Bauteilen, wie Spulen, Kerne in den Spulen, Polschuhe, Rückführungsbleche usw. auf. Diese Bauteile müssen häufig mit hohen Genauigkeiten gefertigt sein, damit es beim Zusammenbau des magnetisch-induktiven Durchflußmeßgeräts zu einer guten Passung und korrekten Ausrichtung der Bauteile zueinander kommt. Dies ist unter anderem erforderlich, um ein vorbestimmtes Magnetfeld mit genau bestimmten Eigenschaften zu erzielen.

Bei dieser Situation ist es die Aufgabe der Erfindung, ein derartiges magnetisch-induktives Durchflußmeßgerät anzugeben, das einfach zusammengebaut werden kann und dabei kostengünstig herstellbar ist.

Ausgehend von dem eingangs beschriebenen magnetisch-induktiven Durchflußmeßgerät ist diese Aufgabe dadurch gelöst, daß das eines der beiden lösbar miteinander verbundenen Bauteile einen elastisch verformbaren Federbereich aufweist, mit dem es gegen das andere Bauteil drückt.

Erfindungsgemäß ist also vorgesehen, daß sich wenigstens das eine Bauteil beim Zusammensetzen des magnetisch-induktiven Durchflußmeßgeräts verformt, wenn es in seine vorgesehene Lage gebracht wird, nämlich gegen das andere Bauteil drückt. Damit wird einerseits eine Fixierkraft erzeugt, mit der die beiden Bauteile in ihrer Lage gehalten werden können, und andererseits erlaubt die Verformbarkeit des Federbereichs des einen Bauteils eine Anpassung an das andere Bauteil, ohne hohen Fertigungsgenauigkeiten genügen zu müssen.

Grundsätzlich kann vorgesehen sein, daß die Bauteile nur partiell, nämlich z. B. punktuell oder längs einer oder mehrerer Linien, aneinander anliegen. Gemäß einer bevorzugten Weiterbildung der Erfindung ist jedoch vorgesehen, daß die Bauteile flächig aneinander anliegen. Damit ist gemeint, daß es wenigstens eine zweidimensionale, gegebenenfalls auch gekrümmt verlaufende Fläche gibt, mit der die beiden Bauteile direkt Kontakt miteinander haben.

Die erfindungsgemäße Konstruktion ist grundsätzlich für eine Vielzahl von Bauteilen eines magnetisch-induktiven Durchflußmeßgeräts, insbesondere für Bauteile des Magnetkreises, einsetzbar. Gemäß einer bevorzugten Weiterbildung der Erfindung ist jedoch vorgesehen, daß das eine Bauteil von einem zum Magnetkreis gehörenden Rückführungsblech gebildet ist. Dabei werden als Rückführungsbleche derartige Bauteile verstanden, die den die Meßleitung durchsetzenden Magnetfluß, typischerweise außerhalb der Meßleitung, in entgegengesetzte Richtung wieder zurückführen. Solch ein Rückführungsblech kann durch ein separates Bauteil gebildet sein. Gemäß einer bevorzugten Weiterbildung der Erfindung ist jedoch vorgesehen, daß das Gehäuse des magnetisch-induktiven Durchflußmeßgeräts als Rückführungsblech wirkt. Dabei kann das Gehäuse des magnetisch-induktiven Durchflußmeßgeräts gleichzeitig die Wirkung von zwei, typischerweise einander gegenüberliegenden, Rückführungsblechen übernehmen.

Dabei kann ferner vorgesehen sein, daß das andere Bauteil an der Innenwand des Gehäuses des magnetisch-induktiven Durchflußmeßgeräts anliegt, wobei die Innenwand vorzugsweise eine dielektrische Beschichtung aufweist. Dabei ist es im übrigen auch bevorzugt, daß das Gehäuse von einem kreisrunden Rohr gebildet wird.

Das andere Bauteil kann nun gemäß einer bevorzugten Weiterbildung der Erfindung ein flexibles Blech aufweisen. Dabei ist es gemäß einer bevorzugten Weiterbildung der Erfindung insbesondere vorgesehen, daß die Spule des Magnetkreises mit einem Kern versehen ist und das flexible Blech an dem Kern befestigt ist. Damit ergibt sich bei dem Vorsehen eines rohrförmigen Gehäuses des magnetisch-induktiven Durchflußmeßgeräts als das eine Bauteil und des an dem Kern der Spule befestigten flexiblen Blechs als das andere Bauteil eine sowohl konstruktiv als auch von der Handhabbarkeit einfache Möglichkeit der Fixierung der Magneteinrichtung in dem Gehäuse. Wie oben schon angesprochen, kann dabei das Gehäuse ferner die Funktion ansonsten separat erforderlicher Rückführungsbleche übernehmen.

Insbesondere kann dabei gemäß einer weiteren bevorzugten Weiterbildung der Erfindung vorgesehen sein, daß die Magneteinrichtung einen Polschuh aufweist und der Polschuh an der dem flexiblen Blech gegenüberliegenden Seite an dem Kern befestigt ist. In diesem Zusammenhang ist es im übrigen gemäß einer bevorzugten Weiterbildung der Erfindung auch vorgesehen, daß der Kern laminar aufgebaut ist und dann vorzugsweise auch das flexible Blech oder/und der Polschuh von einer Schicht des laminar aufgebauten Kerns gebildet werden. Dieser laminare Aufbau ist insbesondere insofern vorteilhaft, als daß dadurch Wirbelströme reduziert werden. Bekanntermaßen ist nämlich die Verlustleistung durch Wirbelströme durch Wärmeerzeugung proportional zum Quadrat der Dicke der Bleche, so daß ein laminarer Aufbau aus voneinander isolierten Blechen eine wesentliche Verringerung der entstehenden Verlustwärme bewirkt.

Während das an der einen Seite des Kerns befestigte flexible Blech bei seiner Anordnung im magnetisch-induktiven Durchflußmeßgerät gegen die Innenwand eines vorzugsweise rohrförmigen Gehäuses des magnetisch-induktiven Durchflußmeßgeräts drückt, ist nun gemäß einer bevorzugten Weiterbildung der Erfindung auch vorgesehen, daß der an der gegenüberliegenden Seite des Kerns befestigte Polschuh auf der Meßleitung anliegt. Dabei kann die Meßleitung von ihrem Querschnitt her unterschiedliche Formen aufweisen. Gemäß einer bevorzugten Weiterbildung der Erfindung ist jedoch vorgesehen, daß eine auf ihrer Oberseite und auf ihrer Unterseite jeweils abgeflachte Meßleitung verwendet wird und dann vorzugsweise sowohl auf der Oberseite als auch auf der Unterseite der Meßleitung jeweils ein Polschuh anliegt. Dem entspricht eine Konstruktion mit zwei Spulen, die auf einander gegenüberliegenden Seiten, nämlich oberhalb bzw. unterhalb, der Meßleitung angeordnet sind, und dabei über jeweils ein flexibles Blech an ihrer Stelle fixiert werden, das gegen den jeweiligen Bereich der Innenwand des Gehäuses des magnetisch-induktiven Durchflußmeßgeräts drückt.

Zur Vermeidung von Stör- und Streufeldern sowie zur Vermeidung einer elektromagnetischen Einkopplung in die Spule ist gemäß einer bevorzugten Weiterbildung der Erfindung vorgesehen, daß diese von einer Einfassung umgeben ist, die die Spule vorzugsweise vollständig umschließt. Dabei kann der Innenbereich der Einfassung auch als Basis zum Aufwickeln der einzelnen Windungen der Spule verwendet werden.

Die Form der Spule ist dabei grundsätzlich frei wählbar. Gemäß einer bevorzugten Weiterbildung der Erfindung ist jedoch vorgesehen, daß die Spule zylinderförmig oder sattelförmig ist. Grundsätzlich kann schließlich noch vorgesehen sein, daß die Spule, gegebenenfalls zusammen mit dem Kern, eingegossen ist in ein elektrisch isolierendes Material.

Im einzelnen gibt es nun eine Vielzahl von Möglichkeiten, das erfindungsgemäße magnetisch-induktive Durchflußmeßgerät auszugestalten und weiterzubilden. Dazu wird auf die dem Patentanspruch 1 nachgeordneten Patentansprüche sowie auf die nachfolgende Beschreibung eines bevorzugten Ausführungsbeispiels der Erfindung unter Bezugnahme auf die Zeichnung verwiesen. In der Zeichnung zeigt
- Fig. 1: eine Einheit für den Magnetkreis eines magnetisch-induktiven Durchflußmeßgeräts gemäß einem bevorzugten Ausführungsbeispiel der Erfindung bestehend aus einem Kern, einem Polschuh und einem flexiblen Blech,
- Fig. 2: die Einrichtung aus Fig. 1 versehen mit einer Spule und
- Fig. 3: den Einbau dieser Einrichtung in ein Gehäuse des magnetisch-induktiven Durchflußmeßgeräts gemäß dem bevorzugten Ausführungsbeispiel der Erfindung.

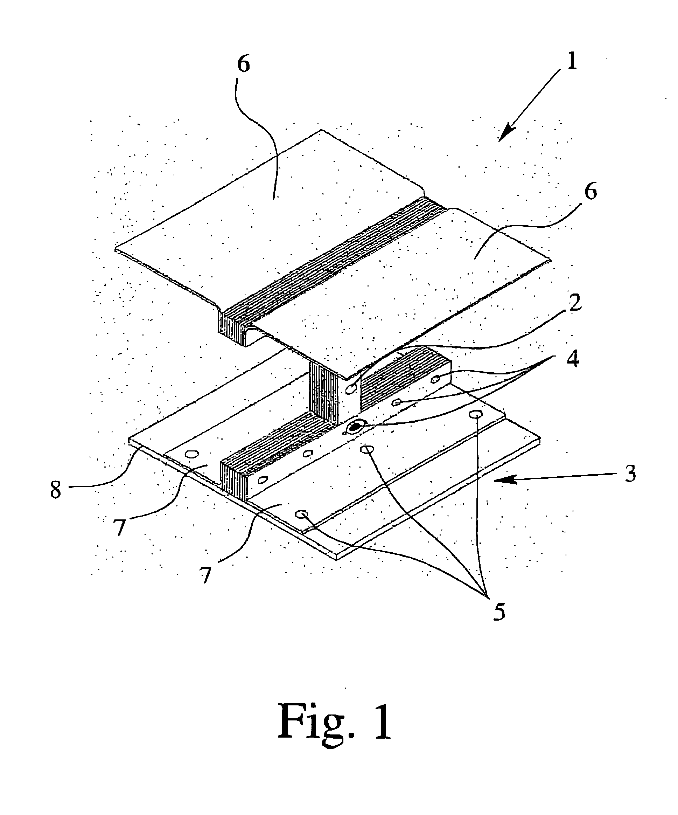

In perspektivischer Ansicht ist aus Fig. 1 eine Einrichtung für den Magnetkreis eines magnetisch-induktiven Durchflußmeßgeräts gemäß einem bevorzugten Ausführungsbeispiel der Erfindung ersichtlich, wobei ein flexibles Blech 1 auf der einen Seite eines Kerns 2 für einen Elektromagneten angebracht ist, und an der anderen Seite des Kerns 2 ein Polschuh 3 befestigt ist. Diese Einrichtung aus flexiblem Blech 1, Kern 2 und Polschuh 3 ist insgesamt laminar aus mehreren voneinander isolierten Blechen aufgebaut. Dieser laminare Aufbau ist, wie oben schon angesprochen, insofern vorteilhaft als daß dadurch Wirbelströme reduziert werden.

Die Bleche für diese Einrichtung des Magnetkreises des magnetisch-induktiven Durchflußmeßgeräts gemäß dem bevorzugten Ausführungsbeispiel der Erfindung sind mit einer Mehrzahl von Bolzen 4 und Stiften 5 zusammengehalten. Insgesamt ist dabei eine Doppel-T-Struktur hergestellt, wobei das flexible Blech 1 aus zwei Blechteilen 6 besteht, die an einer Seite jeweils um 90° umgelegt und damit an dem Kern 2 befestigt sind. Eine entsprechende Konstruktion ist für den Polschuh 3 vorgesehen, wobei auf dünnere Blechteile 7, die am Kern 2 befestigt sind, ein dickeres Blech 8 aufgebracht ist.

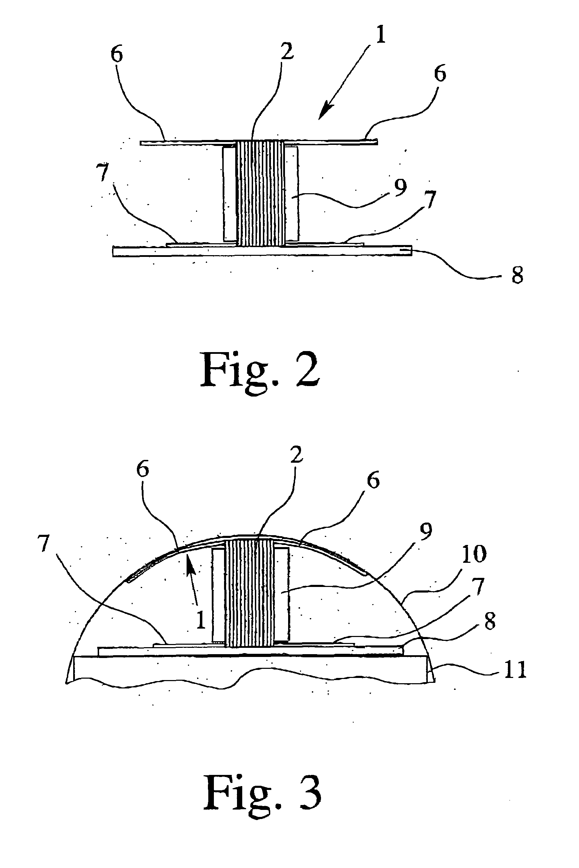

Aus Fig. 2 ist nun im Schnitt ersichtlich, daß der Kern 2 von einer Spule 9 umgeben ist. Dabei muß die Spule 9 nicht direkt auf den Kern 2 gewickelt sein. Vielmehr kann die Spule 9 auch im Abstand zum Kern 2 vorgesehen sein, um z. B. Streuanteile im magnetischen Fluß zu verringern. Diese Einheit aus dem flexiblen Blech 1, dem Kern 2 mit der diesen umgebenden Spule 9 und dem Polschuh 3 wird nun, wie aus Fig. 3 ersichtlich, in dem von einem Rohr 10 gebildeten Gehäuse des magnetisch-induktiven Durchflußmeßgeräts gemäß dem vorliegend beschriebenen bevorzugten Ausführungsbeispiel der Erfindung angeordnet. Dabei drückt das flexible Blech 1 auf die Innenwand des Rohrs 10, das vorliegend aus Stahl hergestellt ist und eine Innenbeschichtung aus einem dielektrischen Material aufweist. Mit seinem Polschuh 10 steht die gesamte Einrichtung auf einer Meßleitung 11 auf, die vorliegend eine auf ihrer Oberseite und auf ihrer Unterseite jeweils abgeflachte Form aufweist. Eine entsprechende Konstruktion, wie zuvor beschrieben, ist auch für die gegenüberliegende Seite, also die Unterseite der Meßleitung 11 vorgesehen, was in der Fig. 3 nicht weiter dargestellt ist.

Damit wird insgesamt eine derartige Konstruktion erzielt, bei der alle Bauteile des Magnetkreises, ohne mit hohen Genauigkeiten gefertigt zu sein, auf einfache Weise in dem Gehäuse des magnetisch-induktiven Durchflußmeßgeräts angeordnet und fixiert werden können, wobei darüber hinaus keine separaten Rückführungsbleche erforderlich sind, nämlich die Seitenwände des als Gehäuse wirkenden Rohres 10 gleichzeitig auch die Funktion der Rückfiihrungsbleche übernehmen. Außerdem ist es mit dieser Konstruktion möglich, für eine Vielzahl von Gerätegrößen immer dieselbe Größe einer Spule zu verwenden, und nur die restlichen Bauteile von der Größe her anzupassen, womit sich ein einfaches modulares Design ergibt. Dabei ist es auch möglich, die Größe, insbesondere die Länge, des Kerns 2 gleich zu lassen, wobei unterschiedliche Durchmesser des das Gehäuse bildenden Rohres 10 bzw. unterschiedliche Querschnitte der Meßleitung 11 darüber ausgeglichen werden, daß das flexible Blech 1 mehr oder weniger stark gebogen ist und damit mehr oder weniger weit an der Innenwand des Rohres 10 anliegt.

## Patentansprüche

1. Magnetisch-induktives Durchflußmeßgerät, mit einem Magnetkreis, der wenigstens eine Spule (9) und wenigstens zwei lösbar miteinander verbundene Bauteile aus einem magnetischen Material aufweist, **dadurch gekennzeichnet, daß** das eine Bauteil einen elastisch verformbaren Federbereich aufweist, mit dem es gegen das andere Bauteil drückt.

2. Magnetisch-induktives Durchflußmeßgerät nach Anspruch 1, **dadurch gekennzeichnet, daß** die Bauteile wenigstens abschnittsweise flächig aneinander anliegen.

3. Magnetisch-induktives Durchflußmeßgerät nach Anspruch 1 oder 2, **dadurch gekennzeichnet, daß** das eine Bauteil von einem zum Magnetkreis gehörenden Rückführungsblech gebildet wird.

4. Magnetisch-induktives Durchflußmeßgerät nach einem der Ansprüche 1 bis 3, **dadurch gekennzeichnet, daß** das eine Bauteil von einem Gehäuse des magnetisch-induktiven Durchflußmeßgeräts gebildet wird.

5. Magnetisch-induktives Durchflußmeßgerät nach Anspruch 4, **dadurch gekennzeichnet, daß** die Innenwand des Gehäuses eine dielektrische Beschichtung aufweist.

6. Magnetisch-induktives Durchflußmeßgerät nach Anspruch 4 oder 5, **dadurch gekennzeichnet, daß** das Gehäuse von einem Rohr (10) gebildet wird.

7. Magnetisch-induktives Durchflußmeßgerät nach einem der Ansprüche 1 bis 6, **dadurch gekennzeichnet, daß** das andere Bauteil von einem flexiblen Blech (1) gebildet wird, das unter Spannung an dem einen Bauteil anliegt.

8. Magnetisch-induktives Durchflußmeßgerät nach Anspruch 7, **dadurch gekennzeichnet, daß** die Spule (9) mit einem Kern (2) versehen ist und das flexible Blech (1) an dem Kern (2) befestigt ist.

9. Magnetisch-induktives Durchflußmeßgerät nach Anspruch 8, **dadurch gekennzeichnet, daß** ein Polschuh (3) vorgesehen ist und der Polschuh (3) an der dem flexiblen Blech (1) gegenüberliegenden Seite an dem Kern (2) befestigt ist.

10. Magnetisch-induktives Durchflußmeßgerät nach Anspruch 9, **dadurch gekennzeichnet, daß** eine auf seiner Oberseite und auf seiner Unterseite jeweils abgeflachte Meßleitung (11) vorgesehen ist und auf der Oberseite und auf der Unterseite der Meßleitung (11) jeweils ein Polschuh (3) anliegt.
